# EUROPÄISCHE PATENTSCHRIFT

(11) **EP 2 720 919 B1**
(45) Veröffentlichungstag und Bekanntmachung des Hinweises auf die Patenterteilung: **05.08.2020**
(21) Anmeldenummer: 12728537.7
(22) Anmeldetag: 19.06.2012
(51) Int. Cl.: B60T 13/74, B60T 13/58, B60T 17/22

(54) **AKTUATORSYSTEM UND BETRIEBSVERFAHREN FÜR EIN AKTUATORSYSTEM**
ACTUATOR SYSTEM AND OPERATING METHOD FOR AN ACTUATOR SYSTEM
SYSTÈME D'ACTIONNEUR ET PROCÉDÉ DE FONCTIONNEMENT POUR SYSTÈME D'ACTIONNEUR

(30) Priorität: 20.06.2011 DE 102011077786
(43) Veröffentlichungstag der Anmeldung: 23.04.2014
(73) Patentinhaber: Continental Teves AG & Co. OHG, 60488 Frankfurt am Main (DE)
(72) Erfinder: SCHNEIDER, Heinz-Anton, 65527 Niedernhausen (DE); MARON, Christof, 65779 Kelkheim (DE)
(86) Internationale Anmeldenummer: PCT/EP2012/061649
(87) Internationale Veröffentlichungsnummer: WO 2012/175471

(56) Entgegenhaltungen:
- DE-A1- 10 021 601
- DE-A1- 10 061 064
- DE-A1-102009 029 525
- DE-B3- 10 361 042
- US-A1- 2006 267 402

## Beschreibung

Die Erfindung betrifft ein Aktuatorsystem, insbesondere elektromechanisches Bremssystem mit den Merkmalen vom Oberbegriff des Patentanspruchs 1 sowie ein Betriebsverfahren nach Anspruch 15.

Eine elektromechanisch betätigbare Kraftfahrzeugbremse mit einem Aktuator ist grundsätzlich bekannt, und umfasst einen Elektromotor, der durch eine elektronische Steuereinheit (ECU) anzusteuern ist. Die Fahrzeugbremse hat ein Betätigungselement (Bremskolben), der auf wenigstens einen Reibbelag wirkt und aus einer Ruhestellung in eine Betätigungsstellung verschiebbar ist, in der das Betätigungselement den Reibbelag gegen einen Reibring anlegt. Das Betätigungselement (Bremskolben) ist durch eine Elektromotor-Getriebeeinheit betätigbar. Der Reibbelag kann dadurch dosiert an einen Reibring angelegt werden.

Aktuatoren in Kraftfahrzeugen, insbesondere Aktuatoren zur Betätigung von Kraftfahrzeugbremsen, sind stark unterschiedlichen Beanspruchungen und Betriebstemperaturen ausgesetzt. Um das Fahrzeug stets sicher abzustellen, ist eine definierten Zuspannkraft bereitzustellen, die durch eine vorgegebene, definierte Bestromung des Aktuators im Rahmen von einer Steuerung oder Regelung des Aktuators unter Einbezug von aktuellen Betriebsparametern vorgenommen werden kann.

Aus der DE 103 61 042 B3 geht ein Verfahren zur Steuerung einer elektrisch betätigbaren Feststellbremse hervor. Bei diesem Verfahren wird zur Kompensation von alterungs- und verschleißbedingten Änderungen der Zuspannkraft bzw. von Änderungen der Zuspannkraft auf Grund von Änderungen des Widerstands und/oder der Temperatur des Elektromotors oder einem Wirkungsgradverlust, der Abschaltstrom des Elektromotors variiert. Es besteht die Kritik, dass das oben beschriebene Verfahren einem Aktuator prinzipiell eine Wirkungsgradverschlechterung zubilligt, während an andere Fahrzeugsysteme (Bordnetz) erhöhte Leistungsanforderungen gestellt werden.

Weiterer Stand der Technik unter Verzicht auf einen besonders ganzheitlich-energiesparenden, bedarfsgerechten Ansatz ergibt sich aus den Dokumenten DE 100 21 601 A1, EP 1 708 912 B1 sowie WO 2011032754 A1 bzw. DE 10 2009 029 525.

Der Erfindung liegt daher die Aufgabe zu Grunde, ein verbessertes Aktuatorsystem und ein besonders effizient verbessertes Betriebsverfahren für ein Aktuatorsystem bereitzustellen, welches eine Systemverbesserung auf Grundlage von einem ganzheitlichen Ansatz ermöglicht, und dadurch eine bedarfsgerecht verbesserte Integration im Fahrzeug ermöglicht.

Die Aufgabe wird auf Grundlage der Merkmale laut Oberbegriff gemeinsam mit den kennzeichnenden Merkmalen des/der unabhängigen Ansprüche gelöst, indem Patentanspruch 1 unter anderem ein Aktuatorsystem mit integrierten Bremssätteln und der Patentanspruch 15 ein Betriebsverfahren definiert. Demnach wird die Steuereinheit in die Lage versetzt einen Soll-Ist-Wertvergleich durchzuführen und in Abhängigkeit von dem Ergebnis eine Hilfsbetätigung anzufordern. Dies dient zur Reduktion einer elektrischen Fahrzeugbordnetzbeanspruchung.

In weiterer Ausgestaltung der Erfindung ist vorgesehen, dass der Steuereinheit von dem Aktuatorsystem als Eingangsgröße eine Information über einen hydraulisch eingesteuerten Druck zugeführt wird.

Demnach wird vorgeschlagen, dass zur Energieeinsparung eine Unterstützungsnachfrage nach einer anderen Energiequelle bewertet wird, und dass eine Unterstützungsnachfrage in Abhängigkeit von der Bewertung durch die Steuereinheit weitergegeben, abgeändert, oder revidiert wird.

Weitere Einzelheiten der Erfindung gehen aus Unteransprüchen im Zusammenhang mit der Beschreibung anhand der Zeichnung hervor. In der Zeichnung zeigt jeweils schematisch:
- Fig. 1: ein bekanntes Bremssystem umfassend Komponenten der Feststellbremse, und
- Fig. 2: schematisches Schaubild zur Verdeutlichung des anliegenden Motorstroms I über der Zeit t beim Zuspannen.

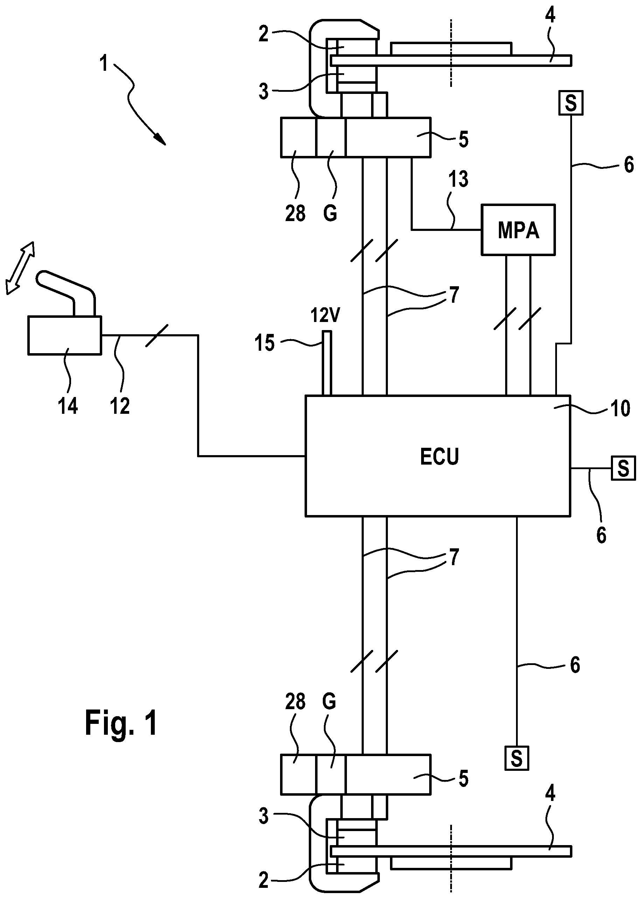

Ein bekanntes Kraftfahrzeugbremssystem 1 gemäß Fig. 1 weist zumindest für jedes Rad einer Achse einen Aktuator 5 auf, der über eine oder mehrere elektrische Versorgungsleitungen 7 jeweils mit einer Steuereinheit 10 verbunden ist. Fig. 1 zeigt ferner eine elektrische Betätigung der Steuereinheit 10 über eine (ggf. mehrfach redundant ausgebildete) elektrische Leitung 12 zum Betätigungsschalter 14 der Feststellbremse, mit dem das Zuspannen oder Lösen der Feststellbremse durch den Fahrer des Kraftfahrzeugs initiiert werden kann. Die Steuereinheit 10 weist eine elektrische Spannungsversorgung 15 auf. Weiterhin können die Aktuatoren 5 Sensoren S, wie insbesondere Temperatursensoren, Drehzahlssensoren, Kraftsensoren oder ähnliche Geber, Schalter oder Betätigungselemente aufweisen, die über zusätzliche Datenleitungen 6 zur Informationsübermittlung mit der Steuereinheit 10 verbunden sind. Jeder Aktuator umfasst einen Elektromotor 28 und ein Getriebe G sowie ggf. ein Bremssattelgehäuse.

Eine universelle Anwendung eines elektronisch angesteuerten Aktuators 5 in Kraftfahrzeugen, sowie eine Erfassung anderer oder zusätzlicher physikalischer Betriebs- und Kenngrößen, ist ohne weiteres denkbar, ohne den Grundgedanken der Erfindung zu verlassen.

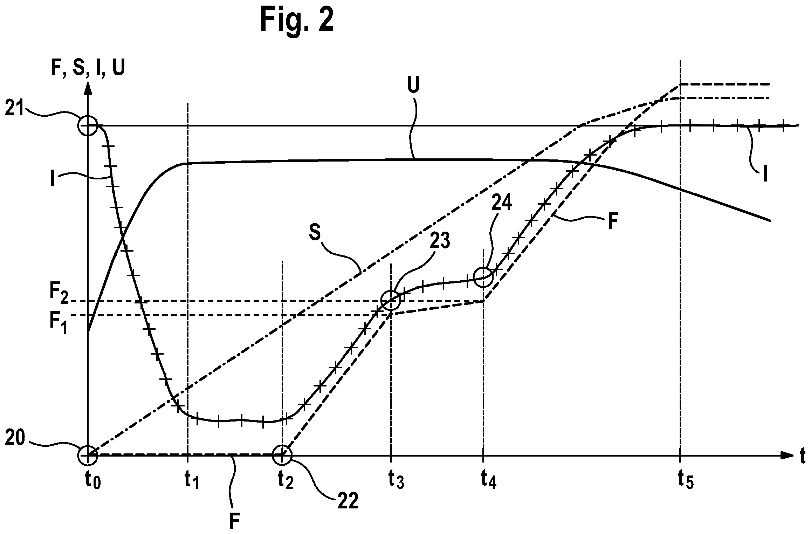

Die Figur 2 verdeutlicht einen charakteristischen Verlauf einer Zuspannkraft F, einer Position S von einer Spindel, Bremsbelags 2,3 o.ä., Stromaufnahme I und der Spannung U beim Zuspannen eines Aktuators 5, jeweils über der Zeit t. In der Steuereinheit 10 wird zu diesem Zweck insbesondere die Stromaufnahme I beobachtet. Die Zuspannkraft F ist in Fig. 2 gestrichelt dargestellt, die Position S ist strichpunktiert und die Stromaufnahme I des elektromechanischen Aktuators 15 ist durch eine Aneinanderreihung von "+"-Symbolen dargestellt. Lediglich die anliegende Spannung U ist in Fig. 2 als durchgezogene Linie dargestellt.

Zu Beginn befindet sich der Aktuator 5 im gelösten Zustand, d.h. die Position S beträgt "null" und die Zuspannkraft F beträgt ebenfalls "null", wie es bei Position 20 zum Zeitpunkt t₀ dargestellt ist. Ziffer 21 verdeutlicht, dass zu Beginn eines Zuspannvorgangs ein vergleichsweise hoher Anlaufstrom notwendig ist, um die mechanische Trägheit zu überwinden und auch von dem Zustand der Ruhereibung in einen Zustand einer Bewegungsreibung zu gelangen. Zum Zeitpunkt t₁ endet diese Anlaufphase und es schließt sich bis zum Zeitpunkt t₂ eine so genannte Anlegephase an. Zum Zeitpunkt t₂ sind Bremsbeläge 2,3 an deren Reibpartner 4 angelegt und dementsprechend steigt mit zunehmendem Weg s die Zuspannkraft F, wie es bei Ziffer 23 dargestellt ist. Die Zuspannkraft F steigt während dieser Zuspannphase bis zum Zeitpunkt t₃ mit einer ersten Steigung an. Nahezu parallel dazu verläuft die Stromaufnahme I. Im Zeitpunkt t₃ knickt die Steigung der Zuspannkraft F ab und der Verlauf der Stromaufnahme I beschreibt ab Ziffer 23 einen Wendepunkt, weil Elastizitäten wie insbesondere ein vorgespanntes Federpaket mit einer definiert-vorgegebenen Federsteifigkeit bis Ziffer 24 komprimiert wird. Zum Zeitpunkt t4 ist die Zuspannkraft derart groß, dass die Elastizität vollständig - auf Block - komprimiert ist. Die Stromaufnahme I beschreibt daher beginnend mit Zeitpunkt t₄ einen Wendepunkt und folgt nahezu parallel der wiederum stark steigenden Zuspannkraft F.

Zum Zeitpunkt t₅ erreicht die Stromaufnahme I den maximalen Strompegel Iₘₐₓ. Gleichzeit findet keine weitere Weg-Verschiebung bzw. Anlage von Bremsbelägen 2,3 statt und die Lage S verändert sich nach dem Zeitpunkt t₅ ebenfalls nicht mehr. Deshalb bleibt die erzeugte Zuspannkraft F nach dem Zeitpunkt t₅ konstant, die gesetzlich definierte Zuspannkraft ist erreicht, und der Aktuator wird abgeschaltet.

Das Aktuatorsystem ist konstruktiv so konzipiert, dass am Bremsbetätigungsorgan (Bremskolben) eine Überlagerung von hydraulischer Energie und (elektro-)mechanischer Energie derart möglich ist, dass elektromechanische Spannkraftanteile, elektrohydraulische Spannkraftanteile und rein hydraulische Spannkraftanteile gebündelt aufgeprägt werden können. Auf dieser Grundlage ermöglicht die Erfindung eine verbesserte Aktuator-Ansteuerung, indem es erfindungsgemäß ermöglicht wird, nicht nur zu erkennen, ob und wann eine Notwendigkeit für eine zusätzliche Unterstützung durch eine andere Energiequelle gegeben ist, sondern eine zusätzliche Prüfung anhand von wenigstens einem Soll-Istwertvergleich vorzunehmen, so dass geprüft wird, ob eine Nachfrage, beispielsweise nach einem energieintensiven, elektrohydraulischen Zuspannkraftaufbau revidiert oder gegebenenfalls abgeändert wird, indem diese zusätzliche Energienachfrage beispielsweise durch mechanische Fahrerenergie befriedigt wird, so dass das Verfahren ein verbessertes Energiemanagement ermöglicht, und ein elektrisches Fahrzeugbordnetz schonen kann. Bevor die Steuereinheit irgend eine andere Energiequelle zur Spannkraftunterstützung gewissermaßen automatisiert betätigt, erfolgt erfindungsgemäß eine Bewertung und Begutachtung der herrschenden Umgebungs- und Rahmenbedingungen. Es kann beurteilt werden, ob und wie die Situation durch intelligente, ggf. vernetzte und zeitlich unterschiedlich gestaffelte Anforderung von Hilfsenergie durch periphere Systeme, Aktuatoren, Fahrzeugführer verbessert werden kann. Dabei wird folglich verifiziert, ob eine prinzipiell nachgefragte Unterstützungsnachfrage zwingend erforderlich ist, oder ob und wie eine abgeänderte Betätigung durch ein ESP-System per fremdbetätigtem elektrohydraulischem Druckaufbau auszuführen ist. Es wird also zwecks Energieeinsparung oder Schonung von elektrischen Versorgern / Bordnetz ermöglicht, dass eine Unterstützungsnachfrage gewissermaßen vollständig verworfen werden kann. Mit anderen Worten wird es durch die Erfindung ermöglicht, eine Mindestzuspannkraft gewissermaßen adaptiv in Abhängigkeit von Fahrzeug- und Umgebungsbedingungen anzupassen. Demzufolge kann die Erfindung auch vorsehen, dass als Fallbacklösung bei überlastetem elektrischen Bordnetz, geringer Fahrzeugmasse und Beladung in Verbindung mit einem Gefälle- oder steigungsfreien Stellplatz eine bedarfsgerecht, minimal gewählte Zuspannkraft definiert ist. Es ist also möglich, die Zuspannkraft adaptiv an die zwingend notwendigen Lastzustände unter Schonung vom elektrischen Bordnetz anzupassen. Im Ergebnis wird unnötiger Energieverbrauch reduziert, und unnötige Beanspruchung von Fahrzeugbauteilen durch ständige Beanspruchung in Höhe der gesetzlich definierten Mindestzuspannkraft ist vermieden. Im Ergebnis wird dadurch der, für die Zuspannvorgänge erforderliche, Energieverbrauch gesenkt, und das Parkbremssystem wird durch bedarfsgerechte Beanspruchung geschont, ohne die Sicherheit zu gefährden.

Es ist möglich, den Soll-Istwert-Vergleich zyklischperiodisch mit einer vorgegebenen, konstanten oder variablen Taktfrequenz vorzusehen.

Der Steuereinheit 10, ECU wird als Eingangsgröße ein Strombedarf von dem Aktuator 5 zugeführt. Zur Beurteilung und Bewertung von Änderungen also des zeitlichen (Zuspann-)Verhaltens von dem Aktuatorsystem wertet die Steuereinheit 10, ECU die zeitliche Änderung des Strombedarfs von dem Aktuator 5 aus. In diesem Zusammenhang wird der Steuereinheit 10, ECU, zur Ausführung von dem Soll-Istwertvergleich wenigstens eine Informationen über Art und Umfang einer Betriebsbremsbetätigung, wie insbesondere wenigstens ein gemessener, hydraulischer Druckwert, zugeführt um eine Summenzuspannkraft zu ermitteln. Des Weiteren wird eine Prüfung durchgeführt, inwiefern der gemessene hydraulische Druckwert mit einem hydraulischen Druck in einem Zylinder, wie insbesondere Hauptzylinder und/oder Radbremszylinder, korreliert. Die Mindestzuspannkraft kann adaptiv veränderbar derart vorgesehen sein, dass die elektromotorische Aktuatorbetätigung in Abhängigkeit von mehreren, in Zyklen ausgeführten Soll-Istwertvergleichen adaptiv-veränderbar gesteuert oder geregelt ausgeführt wird.

Die Steuer- und Regelvorgänge der Steuereinheit 10, ECU, wie insbesondere eine Nachfrage nach Hilfsbetätigung in Abhängigkeit von den Betriebs-, Fahrzeugzeug- und/oder Peripheriebedingungen wird unter Vernetzung mit peripheren Komponenten gesteuert oder geregelt ausgeführt. Insbesondere ist die elektronische Steuereinheit 10, ECU mit wenigstens einer elektronischen Steuereinheit eines Betriebsbremssystems zwecks Übertragung und/oder Austausch von Daten, Signalen und ähnlichem vernetzt (Bus-System) vorgesehen, und wobei das Betriebsbremssystem durch die elektronische Steuereinheit (wie ein hydraulischer Aktuator) fremdbetätigt werden kann. Es ist in diesem Zusammenhang möglich, dass die elektronische Steuereinheit (10,ECU) der elektronischen Steuereinheit auf Grundlage des/der Soll-Istwert-Vergleiche wenigstens einen Sollwert zur Ansteuerung von dem hydraulischen Aktuator vorgibt. Dabei ist vorgesehen, dass der Sollwert einen hydraulischen Druck definiert, der von dem Aktuator ausgeführt wird. Der Sollwert kann fest gespeichert oder variabel abänderbar vorgesehen sein.

In Zusammenhang mit der Nutzung der Erfindung ist es zur Schonung vom elektrischen Bordnetz möglich, dass eine Nachfrage nach Hilfsbetätigung abgebrochen oder unterdrückt wird, wenn der Steuereinheit 10, ECU Informationen vorliegen, dass eine Nachfrage einer Hilfsbetätigung nicht zum Erreichen der Mindestzuspannkraft führt, und wobei das Aktuatorsystem zusätzlich eine Fehlermeldung emittiert.

Die Erfindung wird bei elektrischen Parkbremsen verwendet, die über integrierte Bremssättel verfügen (integriert bedeutet hier hydraulische Kraft und elektromechanisch erzeugte Kraft wirken auf ein gemeinsames Kraftübertragungsglied zum Aufbau einer Bremssattelspankraft) und ist unabhängig von einer konkreten Ausführung des Steuergerätes (Einzelnes Steuergerät ausschließlich für EPB-Funktionen oder ein integriertes Steuergerät EPB- und ABS/ESP-Funktionen) zum Ansteuern der elektromechanischen Aktuatoren der Feststellbremse.

Ganz grundsätzlich ist die Erfindung jedoch für das Energiemanagment bei jedwedem Aktuator oder zur Verwendung bei elektromechanisch betätigbaren Fahrzeugbremsen prinzipiell geeignet.

### Bezugszeichenliste

- 1: Kraftfahrzeugbremssystem
- 2,3: Reibpartner (Reibbelag)
- 4: Reibpartner (Bremsscheibe/Reibring)
- 5: Aktuator
- 6: Datenleitung
- 7: Versorgungsleitung
- 8: Elektronikeinheit (Aktuator)
- 9: Elektronikeinheit (ECU)
- 10: Steuereinheit (ECU)
- 11: Entstörmittel
- 12: Versorgungsleitung
- 13: Hydraulikleitung
- 14: Betätigungsschalter
- 15: Spannungsversorgung
- 20-24: Markierungspunkte
- 28: Elektromotor

- MPA: Motor Pumpen Aggregat
- I: Strom
- n: Drehzahl (Aktuatoraktivität)
- t: Zeit
- t0: bis ti Zeitpunkt
- S: Sensor
- v: Temperatur
- F: Zuspannkraft
- s: Weg
- U: Spannung
- G: Getriebe

## Patentansprüche

1. Aktuatorsystem, nämlich Betriebs- oder Feststellbremse, umfassend mindestens einen elektronisch angesteuerten elektromotorischen Aktuator (5) und mindestens eine elektronische Steuereinheit (10,ECU), die über wenigstens eine elektrische Versorgungsleitung (7) mit dem Aktuator (5) verbunden ist, und wobei die Steuereinheit (10, ECU) mit einem oder mit mehreren Schaltern, Gebern, Sensoren (S) und/oder elektrischen Betätigungselementen verbunden ist, und wenigstens einen Mikroprozessor mit einer implementierten Software zur Umsetzung einer Regelstrategie zwecks gesteuerter oder geregelter elektrischer Versorgung des Aktuators (5) aufweist, und wobei das Aktuatorsystem als elektromechanisch betätigbares Kraftfahrzeugbremssystem (1) umfassend eine elektrisch betätigbare Radbremse zur Erzeugung einer definierten Zuspannkraft zwischen Reibpartner (2,3,4) ausgebildet ist, **dadurch gekennzeichnet, dass** eine elektrische Parkbremse vorgesehen ist, die über integrierte Bremssättel verfügt, wobei der Steuereinheit (10, ECU) eine oder mehrere Informationen als Eingangsgröße zugeführt werden, die es erlauben die von dem elektromotorischen Aktuator (5) ausgeübte Zuspannkraft zu ermitteln, und mit einer vorgegebenen Mindestzuspannkraft zu vergleichen, und wobei die Steuereinheit (10, ECU) wenigstens eine Information oder Signal zur Nachfrage einer Hilfsbetätigung an periphere Systeme, Komponenten und/oder elektronische Steuereinheiten emittiert, nachdem der Soll-Istwertvergleich ergeben hat, dass die ermittelte, von dem Aktuator (5) eingestellte Zuspannkraft kleiner als die vorgegebene Mindestzuspannkraft ist.

2. Aktuatorsystem nach Anspruch 1, **dadurch gekennzeichnet, dass** der Soll-Istwertvergleich durch die Steuereinheit (10,ECU) in Zyklen regelmäßig, insbesondere periodisch, mit einer vorgegebenen Taktfrequenz, wiederholt ausgeführt wird.

3. Aktuatorsystem nach Anspruch 1 und 2, **dadurch gekennzeichnet, dass** die Nachfrage nach einer Hilfsbetätigung, in Abhängigkeit von den Soll-Istwertvergleichen in den Zyklen, fortgesetzt sowie abgeändert emittiert wird.

4. Aktuatorsystem nach einem oder mehreren der Ansprüche 1-3, **dadurch gekennzeichnet, dass** der Steuereinheit (10, ECU) als Eingangsgröße ein Strombedarf des Aktuators (5) zugeführt wird.

5. Aktuatorsystem nach Anspruch 4, **dadurch gekennzeichnet, dass** die Steuereinheit (10, ECU) eine zeitliche Änderung des Strombedarfs des Aktuators (5) ermittelt und beobachtet.

6. Aktuatorsystem nach einem oder mehreren der vorhergehenden Ansprüche, **dadurch gekennzeichnet, dass** der Steuereinheit (10, ECU), zur Ausführung von dem Soll-Istwertvergleich, wenigstens eine Information über Art und Umfang einer Betriebsbremsbetätigung, wie insbesondere wenigstens ein gemessener, hydraulischer Druckwert zugeführt wird, um eine Summenzuspannkraft zu ermitteln.

7. Aktuatorsystem nach einem oder mehreren der vorhergehenden Ansprüche, **dadurch gekennzeichnet, dass** der wenigstens eine gemessene hydraulische Druckwert mit einem hydraulischen Druck in einem Zylinder, wie insbesondere Hauptzylinder und/oder Radbremszylinder, korreliert.

8. Aktuatorsystem nach einem oder mehreren der vorhergehenden Ansprüche, **dadurch gekennzeichnet, dass** die Mindestzuspannkraft adaptiv veränderbar vorgesehen ist, und dass die elektromotorische Aktuatorbetätigung in Abhängigkeit von mehreren, in Zyklen ausgeführten Soll-Istwertvergleichen adaptiv-veränderbar gesteuert oder geregelt ausgeführt wird.

9. Aktuatorsystem nach einem oder mehreren der vorhergehenden Ansprüche , **dadurch gekennzeichnet, dass** die Nachfrage nach Hilfsbetätigung in Abhängigkeit von den Betriebs-, Fahrzeugzeug- und/oder Peripheriebedingungen gesteuert oder geregelt ausgeführt wird.

10. Aktuatorsystem nach einem oder mehreren der vorhergehenden Ansprüche , **dadurch gekennzeichnet, dass** die elektronische Steuereinheit (10, ECU) mit wenigstens einer elektronischen Steuereinheit eines Betriebsbremssystems vernetzt vorgesehen ist, dass die elektronische Steuereinheit zur Ansteuerung des Aktuators (5) vorgesehen ist, und dass die elektronische Steuereinheit (10,ECU) der elektronischen Steuereinheit wenigstens einen Sollwert zur Ansteuerung des Aktuators (5) vorgibt.

11. Aktuatorsystem nach einem oder mehreren der vorhergehenden Ansprüche, **dadurch gekennzeichnet, dass** der Sollwert einen hydraulischen Druck definiert, der von dem Aktuator (5) ausführt wird.

12. Aktuatorsystem nach einem oder mehreren der vorhergehenden Ansprüche , **dadurch gekennzeichnet, dass** der Sollwert fest definiert, vorgeben, ist.

13. Aktuatorsystem nach einem oder mehreren der vorhergehenden Ansprüche , **dadurch gekennzeichnet, dass** der Sollwert in Abhängigkeit von dem Soll-Istwertvergleich variierbar vorgesehen ist.

14. Aktuatorsystem nach einem oder mehreren der vorhergehenden Ansprüche 1-13, **dadurch gekennzeichnet, dass** eine Nachfrage nach Hilfsbetätigung abgebrochen oder unterdrückt wird, wenn der Steuereinheit (10, ECU) Informationen vorliegen, dass eine Nachfrage einer Hilfsbetätigung nicht zum Erreichen der Mindestzuspannkraft führt, und wobei das Aktuatorsystem zusätzlich eine Fehlermeldung emittiert.

15. Betriebsverfahren für ein Aktuatorsystem nach Anspruch 1, nämlich Betriebs- oder Feststellbremse, umfassend mindestens einen elektronisch angesteuerten elektromotorischen Aktuator(5) und mindestens eine elektronisehe Steuereinheit (10,ECU), die über wenigstens eine elektrische Versorgungsleitung (7) mit dem Aktuator (5) verbunden ist, und wobei die Steuereinheit (10, ECU) mit einem oder mit mehreren Schaltern, Gebern, Sensoren (S) und/oder elektrischen Betätigungselementen verbunden ist, und wenigstens einen Mikroprozessor mit einer implementierten Software zur Umsetzung einer Regelstrategie zwecks gesteuerter oder geregelter elektrischer Versorgung des Aktuators (5) aufweist, und wobei das Aktuatorsystem als elektromechanisch betätigbares Kraftfahrzeugbremssystem (1) umfassend eine elektrisch betätigbare Radbremse zur Erzeugung einer definierten Zuspannkraft zwischen Reibpartner (2,3,4) ausgebildet ist, **dadurch gekennzeichnet, dass** der Steuereinheit (10, ECU) in Kooperation mit integrierten Bremssätteln Informationen als Eingangsgröße zugeführt werden, die es erlauben die von dem elektromotorischen Aktuator (5) ausgeübte Zuspannkraft zu ermitteln, und mit einer vorgegebenen Mindestzuspannkraft zu vergleichen, und wobei die Steuereinheit (10, ECU) wenigstens eine Information oder Signal zur Nachfrage einer Hilfsbetätigung an periphere Systeme, Komponenten und/oder elektronische Steuereinheiten emittiert, nachdem der Soll-Istwertvergleich ergeben hat, dass die ermittelte, von dem Aktuator (5) eingestellte Zuspannkraft kleiner als die vorgegebene Mindestzuspannkraft ist.

16. Betriebsverfahren für ein Aktuatorsystem nach Anspruch 15, **dadurch gekennzeichnet, dass** der Soll-Istwertvergleich durch die Steuereinheit (10,ECU) in Zyklen regelmäßig, insbesondere periodisch, mit einer vorgegebenen Taktfrequenz, wiederholt ausgeführt wird.

17. Betriebsverfahren für ein Aktuatorsystem nach Anspruch 15 und 16, **dadurch gekennzeichnet, dass** die Nachfrage nach einer Hilfsbetätigung, in Abhängigkeit von den Soll-Istwertvergleichen in den Zyklen, fortgesetzt sowie abgeändert emittiert wird.

18. Betriebsverfahren für ein Aktuatorsystem nach einem oder mehreren der Ansprüche 15-17, **dadurch gekennzeichnet, dass** der Steuereinheit (10, ECU) als Eingangsgröße ein Strombedarf des Aktuators (5) zugeführt wird.

19. Betriebsverfahren für ein Aktuatorsystem nach Anspruch 18, **dadurch gekennzeichnet, dass** die Steuereinheit (10, ECU) eine zeitliche Änderung des Strombedarf des Aktuators (5) ermittelt und beobachtet.

20. Betriebsverfahren für ein Aktuatorsystem nach einem oder mehreren der Ansprüche 15 bis 19, **dadurch gekennzeichnet, dass** der Steuereinheit (10, ECU), zur Ausführung von dem Soll-Istwertvergleich, wenigstens eine Informationen über Art und Umfang einer Betriebsbremsbetätigung, wie insbesondere wenigstens ein gemessener, hydraulischer Druckwert zugeführt wird, um eine Summenzuspannkraft zu ermitteln.

21. Betriebsverfahren für ein Aktuatorsystem nach einem oder mehreren der Ansprüche 15 bis 20, **dadurch gekennzeichnet, dass** der wenigstens eine gemessene hydraulische Druckwert mit einem hydraulischen Druck in einem Zylinder, wie insbesondere Hauptzylinder und/oder Radbremszylinder, korreliert.

22. Betriebsverfahren für ein Aktuatorsystem nach einem oder mehreren der Ansprüche 15 bis 21, **dadurch gekennzeichnet, dass** die Mindestzuspannkraft adaptiv veränderbar vorgesehen ist, und dass die elektromotorische Aktuatorbetätigung in Abhängigkeit von mehreren, in Zyklen ausgeführten Soll-Istwertvergleichen adaptiv-veränderbar gesteuert oder geregelt ausgeführt wird.

23. Betriebsverfahren für ein Aktuatorsystem nach einem oder mehreren der Ansprüche 15 bis 22, **dadurch gekennzeichnet, dass** die Nachfrage nach Hilfsbetätigung in Abhängigkeit von den Betriebs-, Fahrzeugzeug- und/oder Peripheriebedingungen gesteuert oder geregelt ausgeführt wird.

24. Betriebsverfahren für ein Aktuatorsystem nach einem oder mehreren der Ansprüche 15 bis 23, **dadurch gekennzeichnet, dass** die elektronische Steuereinheit (10, ECU) mit wenigstens einer elektronischen Steuereinheit eines Betriebsbremssystems vernetzt vorgesehen ist, dass die elektronische Steuereinheit zur Ansteuerung von einem gesonderten Aktuator vorgesehen ist, und dass die elektronische Steuereinheit (10,ECU) der elektronischen Steuereinheit wenigstens einen Sollwert zur Ansteuerung des Aktuators vorgibt.

25. Betriebsverfahren für ein Aktuatorsystem nach einem oder mehreren der Ansprüche 15 bis 24, **dadurch gekennzeichnet, dass** der Sollwert einen hydraulischen Druck definiert, der von dem Aktuator (5) ausführt wird.

26. Betriebsverfahren für ein Aktuatorsystem nach einem oder mehreren der Ansprüche 15 bis 25, **dadurch gekennzeichnet, dass** der Sollwert fest definiert, vorgeben, ist.

27. Betriebsverfahren für ein Aktuatorsystem nach einem oder mehreren der Ansprüche 15 bis 26, **dadurch gekennzeichnet, dass** der Sollwert in Abhängigkeit von dem Soll-Istwertvergleich variierbar vorgesehen ist.

28. Betriebsverfahren für ein Aktuatorsystem nach einem oder mehreren der vorhergehenden Ansprüche 15-27, **dadurch gekennzeichnet, dass** eine Nachfrage nach Hilfsbetätigung abgebrochen oder unterdrückt wird, wenn der Steuereinheit (10, ECU) Informationen vorliegen, dass eine Nachfrage einer Hilfsbetätigung nicht zum Erreichen der Mindestzuspannkraft führt, und wobei das Aktuatorsystem zusätzlich eine Fehlermeldung emittiert.

## Claims

1. Actuator system, specifically a service or parking brake, comprising at least one electronically controlled electromotive actuator (5) and at least one electronic control unit (10, ECU), which is connected via at least one electric supply line (7) to the actuator (5), and wherein the control unit (10, ECU) is connected to one or to a plurality of switches, senders, sensors (S) and/or electric actuating elements and comprises at least one microprocessor with implemented software for performing a regulation strategy for controlled or regulated electrical supply of the actuator (5), and wherein the actuator system is designed as an electromechanically actuable motor vehicle brake system (1) comprising an electrically actuable wheel brake for generating a defined application force between friction partners (2,3,4), **characterized in that** an electric parking brake that comprises integrated brake calipers is provided, wherein one or a plurality of items of information is/are supplied to the control unit (10, ECU) as input variables, which enable it to determine the application force exerted by the electromotive actuator (5) and to compare it with a specified minimum application force, and wherein the control unit (10, ECU) emits at least one item of information or signal for demanding a boosting actuation to peripheral systems, components and/or electronic control units, after the target-actual value comparison has shown that the determined application force set by the actuator (5) is smaller than the specified minimum application force.

2. Actuator system according to Claim 1, **characterized in that** the target-actual value comparison is repeatedly and regularly performed by the control unit (10, ECU) in cycles, especially periodically, with a specified clocking frequency.

3. Actuator system according to Claims 1 and 2, **characterized in that** the demand for a boosting actuation, depending on the target-actual value comparisons in the cycles, is continued and emitted in modified form.

4. Actuator system according to one or more of Claims 1-3, **characterized in that** a current demand of the actuator (5) is supplied to the control unit (10, ECU) as an input variable.

5. Actuator system according to Claim 4, **characterized in that** the control unit (10, ECU) detects and observes a change of the current demand of the actuator (5) over time.

6. Actuator system according to one or more of the preceding claims, **characterized in that** at least one item of information about the type and scope of a service brake actuation, such as especially at least one measured, hydraulic pressure value, is supplied to the control unit (10, ECU) for performing the target-actual value comparison to determine a total application force.

7. Actuator system according to one or more of the preceding claims, **characterized in that** the at least one measured hydraulic pressure value correlates with a hydraulic pressure in a cylinder, such as especially a master cylinder and/or a wheel brake cylinder.

8. Actuator system according to one or more of the preceding claims, **characterized in that** the minimum application force is provided in adaptively variable form, and that the electromotive actuator actuation is performed with adaptively variable control or regulation depending on a plurality of target-actual value comparisons carried out in cycles.

9. Actuator system according to one or more of the preceding claims, **characterized in that** the demand for boosting actuation is implemented with control or regulation depending on the operating, vehicle and/or peripheral conditions.

10. Actuator system according to one or more of the preceding claims, **characterized in that** the electronic control unit (10, ECU) is provided with at least one networked electronic control unit of a service brake system, that the electronic control unit is provided for controlling the actuator (5), and that the electronic control unit (10, ECU) specifies at least one target value for the electronic control unit for controlling the actuator (5) .

11. Actuator system according to one or more of the preceding claims, **characterized in that** the target value defines a hydraulic pressure that is applied by the actuator (5).

12. Actuator system according to one or more of the preceding claims, **characterized in that** the target value is specified as a defined fixed value.

13. Actuator system according to one or more of the preceding claims, **characterized in that** the target value is variably provided depending on the target-actual value comparison.

14. Actuator system according to one or more of the preceding Claims 1-13, **characterized in that** a demand for boosting actuation is terminated or inhibited if the control unit (10, ECU) has information that a demand for a boosting actuation does not cause achievement of the minimal application force, and wherein the actuator system additionally emits an error message.

15. Operating method for an actuator system according to Claim 1, specifically a service or parking brake, comprising at least one electronically controlled electromotive actuator (5) and at least one electronic control unit (10, ECU), which is connected via at least one electric supply line (7) to the actuator (5), and wherein the control unit (10, ECU) is connected to one or to a plurality of switches, senders, sensors (S) and/or electric actuating elements and comprises at least one microprocessor with implemented software for performing a regulation strategy for controlled or regulated electrical supply of the actuator (5), and wherein the actuator system is designed as an electromechanically actuable motor vehicle brake system (1) comprising an electrically actuable wheel brake for generating a defined application force between friction partners (2,3,4), **characterized in that,** in cooperation with integrated brake calipers, items of information are supplied to the control unit (10, ECU) as input variables, which enable it to determine the application force exerted by the electromotive actuator (5) and to compare it with a specified minimum application force, and wherein the control unit (10, ECU) emits at least one item of information or signal for demanding a boosting actuation to peripheral systems, components and/or electronic control units, after the target-actual value comparison has shown that the determined application force set by the actuator (5) is smaller than the specified minimum application force.

16. Operating method for an actuator system according to Claim 15, **characterized in that** the target-actual value comparison is repeatedly and regularly performed by the control unit (10, ECU) in cycles, especially periodically, with a specified clocking frequency.

17. Operating method for an actuator system according to Claims 15 and 16, **characterized in that** the demand for a boosting actuation, depending on the target-actual value comparisons in the cycles, is continued and emitted in modified form.

18. Operating method for an actuator system according to one or more of Claims 15-17, **characterized in that** a current demand of the actuator (5) is supplied to the control unit (10, ECU) as an input variable.

19. Operating method for an actuator system according to Claim 18, **characterized in that** the control unit (10, ECU) detects and observes a change of the current demand of the actuator (5) over time.

20. Operating method for an actuator system according to one or more of Claims 15 to 19, **characterized in that** at least one item of information about the type and scope of a service brake actuation, such as especially at least one measured, hydraulic pressure value, is supplied to the control unit (10, ECU) for performing the target-actual value comparison to determine a total application force.

21. Operating method for an actuator system according to one or more of Claims 15 to 20, **characterized in that** the at least one measured hydraulic pressure value correlates with a hydraulic pressure in a cylinder, such as especially a master cylinder and/or a wheel brake cylinder.

22. Operating method for an actuator system according to one or more of Claims 15 to 21, **characterized in that** the minimum application force is provided in adaptively variable form, and that the electromotive actuator actuation is performed with adaptively variable control or regulation depending on a plurality of target-actual value comparisons carried out in cycles.

23. Operating method for an actuator system according to one or more of Claims 15 to 22, **characterized in that** the demand for boosting actuation is implemented with control or regulation depending on the operating, vehicle and/or peripheral conditions.

24. Operating method for an actuator system according to one or more of Claims 15 to 23, **characterized in that** the electronic control unit (10, ECU) is provided with at least one networked electronic control unit of a service brake system, that the electronic control unit is provided for controlling a separate actuator, and that the electronic control unit (10, ECU) specifies at least one target value for the electronic control unit for controlling the actuator.

25. Operating method for an actuator system according to one or more of Claims 15 to 24, **characterized in that** the target value defines a hydraulic pressure that is applied by the actuator (5).

26. Operating method for an actuator system according to one or more of the Claims 15 to 25, **characterized in that** the target value is specified as a defined fixed value.

27. Operating method for an actuator system according to one or more of Claims 15 to 26, **characterized in that** the target value is variably provided depending on the target-actual value comparison.

28. Operating method for an actuator system according to one or more of the preceding Claims 15-27, **characterized in that** a demand for a boosting actuation is terminated or inhibited if the control unit (10, ECU) has information that a demand for boosting actuation does not cause achievement of the minimal application force, and wherein the actuator system additionally emits an error message.

## Revendications

1. Système actionneur, à savoir frein de service ou d'immobilisation, comprenant au moins un actionneur (5) électromotorisé à commande électronique et au moins une unité de commande (10, ECU) électronique, qui est reliée à l'actionneur (5) par le biais d'au moins une ligne d'alimentation (7), et l'unité de commande (10, ECU) étant reliée à un ou plusieurs commutateurs, transmetteurs, capteurs (S) et/ou éléments d'actionnement électriques, et possédant au moins un microprocesseur avec un logiciel mis en œuvre pour transposer une stratégie de régulation en vue d'une alimentation électrique commandée ou régulée de l'actionneur (5), et le système actionneur étant réalisé sous la forme d'un système de frein de véhicule automobile (1) à actionnement électromécanique comprenant un frein de roue à actionnement électrique destiné à générer une force d'application de frein définie entre des partenaires de friction (2, 3, 4), **caractérisé en ce qu'**un frein de stationnement électrique est présent, lequel dispose d'étriers de frein intégrés, une ou plusieurs informations étant acheminées à l'unité de commande (10, ECU) en tant que grandeurs d'entrée qui permettent de déterminer la force d'application de frein exercée par l'actionneur (5) électromotorisé et de la comparer avec une force d'application de frein minimale prédéfinie, et l'unité de commande (10, ECU) émettant au moins une information ou un signal destiné à demander un actionnement auxiliaire à des systèmes périphériques, des composants et/ou des unités de commande électroniques après que la comparaison des valeurs de consigne-réelle a révélé que la force d'application de frein réglée par l'actionneur (5) déterminée est inférieure à la force d'application de frein minimale prédéfinie.

2. Système actionneur selon la revendication 1, **caractérisé en ce que** la comparaison des valeurs de consigne-réelle est exécutée par l'unité de commande (10, ECU) régulièrement dans des cycles, notamment périodiquement, de manière répétitive à une fréquence d'horloge prédéfinie.

3. Système actionneur selon les revendications 1 et 2, **caractérisé en ce que** la demande pour un actionnement auxiliaire est émise continuellement et aussi modifiée dans les cycles en fonction de la comparaison des valeurs de consigne-réelle.

4. Système actionneur selon une ou plusieurs des revendications 1 à 3, **caractérisé en ce qu'**un besoin en courant de l'actionneur (5) est acheminé à l'unité de commande (10, ECU) en tant que grandeur d'entrée.

5. Système actionneur selon la revendication 4, **caractérisé en ce que** l'unité de commande (10, ECU) détermine et observe une variation dans le temps du besoin en courant de l'actionneur (5).

6. Système actionneur selon une ou plusieurs des revendications précédentes, **caractérisé en ce que** pour exécuter la comparaison des valeurs de consigne-réelle, au moins une information à propos de la nature et de l'étendue d'un actionnement de frein de service, comme notamment au moins une valeur de pression hydraulique mesurée, est acheminée à l'unité de commande (10, ECU) en vue de déterminer une force d'application de frein totale.

7. Système actionneur selon une ou plusieurs des revendications précédentes, **caractérisé en ce que** l'au moins une valeur de pression hydraulique mesurée est corrélée avec une pression hydraulique dans un cylindre, notamment un maître-cylindre et/ou un cylindre de frein de roue.

8. Système actionneur selon une ou plusieurs des revendications précédentes, **caractérisé en ce que** la force d'application de frein minimale est conçue modifiable de manière adaptative, et **en ce que** l'actionnement d'actionneur électromotorisé est exécuté de manière commandée ou régulée avec variation adaptative en fonction de plusieurs comparaisons des valeurs de consigne-réelle exécutées dans des cycles.

9. Système actionneur selon une ou plusieurs des revendications précédentes, **caractérisé en ce que** la demande pour un actionnement auxiliaire est exécutée de manière commandée ou régulée en fonction des conditions de fonctionnement, de véhicule et/ou périphériques.

10. Système actionneur selon une ou plusieurs des revendications précédentes, **caractérisé en ce que** l'unité de commande (10, ECU) électronique est conçue mise en réseau avec au moins une unité de commande électronique d'un système de frein de service, **en ce que** l'unité de commande électronique est conçue pour commander l'actionneur (5) et **en ce que** l'unité de commande (10, ECU) électronique prescrit à l'unité de commande électronique au moins une valeur de consigne servant à la commande de l'actionneur (5).

11. Système actionneur selon une ou plusieurs des revendications précédentes, **caractérisé en ce que** la valeur de consigne définit une pression hydraulique qui est exercée par l'actionneur (5).

12. Système actionneur selon une ou plusieurs des revendications précédentes, **caractérisé en ce que** la valeur de consigne est prédéfinie de manière fixe.

13. Système actionneur selon une ou plusieurs des revendications précédentes, **caractérisé en ce que** la valeur de consigne est conçue variable en fonction de la comparaison des valeurs de consigne-réelle.

14. Système actionneur selon une ou plusieurs des revendications 1 à 13, **caractérisé en ce qu'**une demande pour un actionnement auxiliaire est interrompue ou inhibée lorsque l'unité de commande (10, ECU) dispose d'informations selon lesquelles une demande pour un actionnement auxiliaire ne permet pas d'atteindre la force d'application de frein minimale et le système actionneur émettant en plus un message d'erreur.

15. Procédé de fonctionnement pour un système actionneur selon la revendication 1, à savoir frein de service ou d'immobilisation, comprenant au moins un actionneur (5) électromotorisé à commande électronique et au moins une unité de commande (10, ECU) électronique, qui est reliée à l'actionneur (5) par le biais d'au moins une ligne d'alimentation (7), et l'unité de commande (10, ECU) étant reliée à un ou plusieurs commutateurs, transmetteurs, capteurs (S) et/ou éléments d'actionnement électriques, et possédant au moins un microprocesseur avec un logiciel mis en œuvre pour transposer une stratégie de régulation en vue d'une alimentation électrique commandée ou régulée de l'actionneur (5), et le système actionneur étant réalisé sous la forme d'un système de frein de véhicule automobile (1) à actionnement électromécanique comprenant un frein de roue à actionnement électrique destiné à générer une force d'application de frein définie entre des partenaires de friction (2, 3, 4), **caractérisé en ce que** des informations sont acheminées en tant que grandeurs d'entrée à l'unité de commande (10, ECU) en coopération avec des étriers de frein intégrés, lesquelles permettent de déterminer la force d'application de frein exercée par l'actionneur (5) électromotorisé et de la comparer avec une force d'application de frein minimale prédéfinie, et l'unité de commande (10, ECU) émettant au moins une information ou un signal destiné à demander un actionnement auxiliaire à des systèmes périphériques, des composants et/ou des unités de commande électroniques après que la comparaison des valeurs de consigne-réelle a révélé que la force d'application de frein réglée par l'actionneur (5) déterminée est inférieure à la force d'application de frein minimale prédéfinie.

16. Procédé de fonctionnement pour un système actionneur selon la revendication 15, **caractérisé en ce que** la comparaison des valeurs de consigne-réelle est exécutée par l'unité de commande (10, ECU) régulièrement dans des cycles, notamment périodiquement, de manière répétitive à une fréquence d'horloge prédéfinie.

17. Procédé de fonctionnement pour un système actionneur selon les revendications 15 et 16, **caractérisé en ce que** la demande pour un actionnement auxiliaire est émise continuellement et aussi modifiée dans les cycles en fonction de la comparaison des valeurs de consigne-réelle.

18. Procédé de fonctionnement pour un système actionneur selon une ou plusieurs des revendications 15 à 17, **caractérisé en ce qu'**un besoin en courant de l'actionneur (5) est acheminé à l'unité de commande (10, ECU) en tant que grandeur d'entrée.

19. Procédé de fonctionnement pour un système actionneur selon la revendication 18, **caractérisé en ce que** l'unité de commande (10, ECU) détermine et observe une variation dans le temps du besoin en courant de l'actionneur (5).

20. Procédé de fonctionnement pour un système actionneur selon une ou plusieurs des revendications 15 à 19, **caractérisé en ce que** pour exécuter la comparaison des valeurs de consigne-réelle, au moins une information à propos de la nature et de l'étendue d'un actionnement de frein de service, comme notamment au moins une valeur de pression hydraulique mesurée, est acheminée à l'unité de commande (10, ECU) en vue de déterminer une force d'application de frein totale.

21. Procédé de fonctionnement pour un système actionneur selon une ou plusieurs des revendications 15 à 20, **caractérisé en ce que** l'au moins une valeur de pression hydraulique mesurée est corrélée avec une pression hydraulique dans un cylindre, notamment un maître-cylindre et/ou un cylindre de frein de roue.

22. Procédé de fonctionnement pour un système actionneur selon une ou plusieurs des revendications 15 à 21, **caractérisé en ce que** la force d'application de frein minimale est conçue modifiable de manière adaptative, et **en ce que** l'actionnement d'actionneur électromotorisé est exécuté de manière commandée ou régulée avec variation adaptative en fonction de plusieurs comparaisons des valeurs de consigne-réelle exécutées dans des cycles.

23. Procédé de fonctionnement pour un système actionneur selon une ou plusieurs des revendications 15 à 22, **caractérisé en ce que** la demande pour un actionnement auxiliaire est exécutée de manière commandée ou régulée en fonction des conditions de fonctionnement, de véhicule et/ou périphériques.

24. Procédé de fonctionnement pour un système actionneur selon une ou plusieurs des revendications 15 à 23, **caractérisé en ce que** l'unité de commande (10, ECU) électronique est conçue mise en réseau avec au moins une unité de commande électronique d'un système de frein de service, **en ce que** l'unité de commande électronique est conçue pour commander un actionneur séparé et **en ce que** l'unité de commande (10, ECU) électronique prescrit à l'unité de commande électronique au moins une valeur de consigne servant à la commande de l'actionneur.

25. Procédé de fonctionnement pour un système actionneur selon une ou plusieurs des revendications 15 à 24, **caractérisé en ce que** la valeur de consigne définit une pression hydraulique qui est exercée par l'actionneur (5) .

26. Procédé de fonctionnement pour un système actionneur selon une ou plusieurs des revendications 15 à 25, **caractérisé en ce que** la valeur de consigne est prédéfinie de manière fixe.

27. Procédé de fonctionnement pour un système actionneur selon une ou plusieurs des revendications 15 à 26, **caractérisé en ce que** la valeur de consigne est conçue variable en fonction de la comparaison des valeurs de consigne-réelle.

28. Procédé de fonctionnement pour un système actionneur selon une ou plusieurs des revendications 15 à 27, **caractérisé en ce qu'**une demande pour un actionnement auxiliaire est interrompue ou inhibée lorsque l'unité de commande (10, ECU) dispose d'informations selon lesquelles une demande pour un actionnement auxiliaire ne permet pas d'atteindre la force d'application de frein minimale et le système actionneur émettant en plus un message d'erreur.
